(19) Europäisches Patentamt
European Patent Office
Office européen des brevets

(11) EP 0 710 500 B1

(12) **EUROPÄISCHE PATENTSCHRIFT**

(45) Veröffentlichungstag und Bekanntmachung des Hinweises auf die Patenterteilung:
**15.11.2000 Patentblatt 2000/46**

(51) Int Cl.[7]: **B01F 17/00**, A01N 25/30, B01F 17/54, B01F 17/42

(21) Anmeldenummer: **95116629.7**

(22) Anmeldetag: **21.10.1995**

(54) **Tensidgemische aus Silantensiden und Polyalkylenoxiden und deren Verwendung**

Tenside mixtures of silane surfactants and polyalkylenoxides, and use thereof

Mélanges tensio-actifs d'émulsifiants silanes et de polyalkylèneoxydes, et leur utilisation

(84) Benannte Vertragsstaaten:
**BE CH DE FR GB IT LI LU NL**

(30) Priorität: **05.11.1994 DE 4439598**

(43) Veröffentlichungstag der Anmeldung:
**08.05.1996 Patentblatt 1996/19**

(73) Patentinhaber: **Goldschmidt AG**
**45127 Essen (DE)**

(72) Erfinder:
- **Höhner, Werner**
  **D-42555 Velbert 11 (DE)**
- **Klein, Klaus-Dieter, Dr.**
  **D-45468 Mülheim a. d. Ruhr (DE)**
- **Schaefer, Dietmar, Dr.**
  **D-45529 Hattingen (DE)**

(56) Entgegenhaltungen:
**DE-A- 4 320 920**
**DE-A- 4 415 556**
**US-A- 5 104 647**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 710 500 B1

## Beschreibung

Die Erfindung betrifft spezifische Gemische aus Silantensiden und Polyalkylenoxiden und deren Verwendung als Hilfsmittel in Pflanzenschutzformulierungen.

Nichtionische Tenside finden verbreitet Anwendung als sogenannte Adjuvanzien zur Wirkungsverbesserung in Agroformulierungen. Sie bewirken eine Steigerung der Effizienz von Pestiziden wie Fungiziden, Herbiziden und Wachstumsregulatoren, wobei sie dispergierend, netzend oder emulgierend wirken können.

Tenside unterstützen aufgrund der Herabsetzung der Oberflächenspannung die Verteilung der Lösungen auf schwer benetzbaren Oberflächen, wie beispielsweise wachshaltigen Blattoberflächen und erleichtern den Übergang von Wirkstoffen aus der Lösung durch Permeation durch die Blatthaut. Die Netzeigenschaften der verwendeten Tenside sind also mitentscheidend für die Gesamtwirksamkeit einer Pflanzenschutzformulierung.

Aufgrund ihrer ausgezeichneten Netzeigenschaften finden daher zunehmend Organosilicon-Verbindungen Verwendung in solchen Formulierungen. Man hat auch versucht, durch Cotenside die Oberflächenspannung weiter herabzusetzen. So werden in US-A-3 562 786 Mischungen von nichtionischen Silicontensiden mit konventionellen organischen ionischen und nichtionischen Tensiden beschrieben. Insbesondere werden Nonylphenol- oder Alkoholethoxylate als Cotenside verwendet.

Diese Substanzen verschlechtern jedoch die erwünschten Netzeigenschaften der Silicontensid-Komponenten.

Gemäß US-A-5 104 647 werden daher organische Cotenside vorgeschlagen, die einerseits in synergistischer Weise die Oberflächenspannung weiter herabzusetzen vermögen, andererseits keine negative Auswirkung auf die Netzeigenschaften der eingesetzten Siliconnetzmittel aufweisen.

Silantenside besitzen ebenfalls ausgezeichnete tensidische Eigenschaften, die denen der Siliconnetzmittel entsprechen. Sie unterscheiden sich jedoch erheblich in ihrer Molekülstruktur von diesen, da sie lediglich eine einzige Trialkylsilylgruppierung enthalten. In ihrem strukturellen Aufbau ähneln sie mehr den konventionellen organischen Tensiden (DE-A-43 20 920).

Überraschend wurde nun gefunden, daß spezielle Abmischungen von Silantensiden mit bestimmten organischen Cotensiden nicht nur niedrige Oberflächenspannungen aufweisen und die Netzeigenschaften der Silantenside darüber hinaus durch die Cotenside synergistisch gesteigert werden können.

Die Erfindung betrifft somit ein Tensidgemisch, bestehend aus

a) Silanen der allgemeinen Formel

$$\begin{array}{c} R^1 \\ | \\ R^2\text{-}Si\text{-}R^4\text{-}R^5\text{-}OR^6 \\ | \\ R^3 \end{array} \qquad \text{(Formel I)}$$

wobei

| | |
|---|---|
| $R^1$, $R^2$ und $R^3$ | im Molekül gleich oder verschieden sind und aliphatische oder aromatische Kohlenwasserstoffreste bedeuten, |
| $R^4$ | ein zweiwertiger Kohlenwasserstoffrest mit 3 bis 14 Kohlenstoffatomen ist, |
| $R^5$ | ein Rest der Formel $-O(CH_2)_a-$ oder ein Polyetherrest der Formel $-(OC_nH_{2n})_b-$ ist, wobei a einen Wert von 1 bis 6, n einen mittleren Wert von 2 bis 2,5 und b einen Wert von 1 bis 10 hat, |
| $R^6$ | ein Wasserstoffrest, ein Alkylrest mit 1 bis 4 Kohlenstoffatomen oder ein Acetylrest ist, |

und

b) Polyalkylenoxiden der allgemeinen Formel

$$R'O\text{-}(C_2H_4O)_c(C_3H_6O)_d\text{-}R'',$$

wobei

c = bis 20,
d = 1 bis 10 und
R' und R" unabhängig voneinander Wasserstoff oder eine lineare oder verzweigte Alkylgruppe mit 1 bis 14 Kohlenstoffatomen bedeuten, und wobei das Verhältnis c:d 60:40 bis 70:30 und das mittlere Molekulargewicht $M_w$ 500 bis 600 g/Mol beträgt.

Bevorzugt beträgt der Anteil der Komponente a) 1 bis 50 Gew.-% und der Anteil an Polyoxyalkylenkomponente b) 50 bis 99 Gew.-%.

Bevorzugt wird als Silantensid-Komponente ein Silan der Formel I eingesetzt, bei dem die Reste $R^1$, $R^2$ und $R^3$ Alkylreste mit 1 bis 4 C-Atomen sind, wobei einer dieser Reste durch einen Phenylrest ersetzt sein kann, wobei solche bevorzugt sind, bei denen mindestens 90 % der Reste $R^1$, $R^2$ und $R^3$ Methylreste sind.

Weiter bevorzugt sind als Silane, bei denen der Rest $R^4$ ein zweiwertiger aliphatischer Kohlenwasserstoffrest mit 3 bis 14, insbesondere 3 bis 6 Kohlenstoffatomen ist.

Bevorzugt ist weiterhin als Rest $R^5$ ein Polyetherrest, bei welchem n einen Wert von 2 und b einen Wert von 3 bis 6 hat.

Bei Verwendung der erfindungsgemäßen Tensidgemische in wäßrigen Medien ist es möglich, durch Zugabe von 0,1 Gew.-% an Silantensiden bzw. 0,2 Gew.-% des erfindungsgemäßen Tensidgemisches die Oberflächenspannung wäßriger Lösungen auf Werte bis zu etwa 22,8 mN/m zu erniedrigen. Dabei ist die biologische Abbaubarkeit der erfindungsgemäßen Verbindungen von ganz besonderer Bedeutung. Sie wird ergänzt durch die Hydrolysestabilität der Silantenside.

Wichtige Einsatzmöglichkeiten der erfindungsgemäßen Tensidgemische sind u.a.:
als Netzmittel:
in Zubereitungen zur Behandlung von Pflanzen (Agroformulierungen); zur Verbesserung der Benetzung niederenergetischer Substrate, wie etwa Polyethylen-, Polypropylenoberflächen; für die Anwendung in der Lackindustrie; bei der Herstellung photografischer Filme; in der Galvanotechnik;
als Dispergiermittel:
für Dispersionsfarbstoffe, Pigmente und Füllstoffe;
als Emulgiermittel oder Zusatzstoffe in der Textilindustrie zur Herstellung von Textilhilfsmitteln, Avivagen, Gleitmitteln, antistatischen Zubereitungen; als Färbereihilfsmittel;
als Tenside allgemein:
zur Verwendung in Feuerlöschmitteln; als Schaumstabilisatoren; als grenzflächenaktive Zusätze für Schnelldrucktinten, Klebstoffe, Dispersionsklebstoffe, Schmelzkleber; Verwendung in Waschmitteln; als Zusatzstoffe für technische Reiniger;
als Rohstoffe für die Verwendung in der Kosmetik, z.B. in Pflegemitteln, Shampoos, Duschbädern;
in technischen Anwendungen und im Haushalt:
als Antibeschlagmittel; zur Verwendung in Geschirrspülmitteln, Waschmitteln, WC-Reinigern, Selbstglanzemulsionen.

Beispiele

Als Oberflächenspannung des Silantensids wurde 22,8 mN/m (0,1 %ig), als die der Abmischungen 22,8 mN/m (0,2 %ig) bestimmt.

Die Tensidmischungen wurden auf ihr Netzverhalten hin in 0,2 Gew.-%iger Lösung untersucht. Die Versuche zeigen, daß das Netzverhalten der jeweiligen Mischung deutlich besser war als das der in 0,1 Gew.-%iger Lösung applizierten einzelnen Ausgangskomponenten.

Zur Bestimmung des Netzverhaltens der Tenside/Tensidmischungen wurden 1 bzw. 2 g Wirksubstanz in 1000 ml destilliertem Wasser gelöst und 0,05 ml dieser Lösung auf eine Polypropylenfolie *(40 µ, OPAK FORCO OPPB)* aufgetragen. Infolge der niedrigen Oberflächenspannung der wässrigen Tensidlösung spreitet der aufgetragene Wassertropfen spontan auf der Polypropylenfolie. Ein direktes Maß für die Netzwirkung der Tensidabmischung ist dabei der Durchmesser der benetzten Fläche (gemessen in mm), den die wäßrige Lösung einnimmt. Dieser wird dann - zum besseren Vergleich - dazu benutzt, den Inhalt der benetzten Fläche zu berechnen.

Tabelle:

| Netzeigenschaft synergistischer Gemische im Vergleich zu den Einzelkomponenten | | |
|---|---|---|
| Silantensid/Cotensid (1 : 1) | Konzentration [Gew.-%] | Benetzung [$mm^2$] |
| Trimethylsilylhexylpolyether (ca. 4 EO/kein Cotensid) * | 0,1 | 3577 |

* Vergleichsbeispiel

Tabelle: (fortgesetzt)

| Netzeigenschaft synergistischer Gemische im Vergleich zu den Einzelkomponenten | | |
|---|---|---|
| Silantensid/Cotensid (1 : 1) | Konzentration [Gew.-%] | Benetzung [$mm^2$] |
| kein Silantensid/PE 1 * | 0,2 | 64 |
| Trimethylsilylpolyether/PE 1 | 0,2 | 5024 |
| Trimethylsilylpolyether/PE 2 * | 0,2 | 3316 |
| Trimethylsilylpolyether/PE 3 * | 0,2 | 5024 |
| Trimethylsilylpolyether/PE 4 * | 0,2 | 3623 |
| Trimethylsilylpolyether/PE 5 * | 0,2 | 3316 |
| Trimethylsilylpolyether/PE 6 * | 0,2 | 3646 |
| Trimethylsilylpolyether/PE 7 * | 0,2 | 3846 |
| Trimethylsilylpolyether/PE 8 * | 0,2 | 3846 |

* Vergleichsbeispiel

| Eingesetzte Polyether: | | | | | |
|---|---|---|---|---|---|
| Polyether | Starter | EO/PO (Gew.-%) | c | d | MW (g/mol) |
| PE 1 | Hexanol | 64/36 | 6,6 | 2,8 | 555 |
| PE 2 * | Butanol | 82/18 | 23,6 | 3,9 | 1339 |
| PE 3 * | Butanol | 20/80 | 2,0 | 5,9 | 500 |
| PE 4 * | Butanol | 100/0 | 5,2 | 0 | 300 |
| PE 5 * | Butanol | 42/58 | 28 | 50,5 | 3000 |
| PE 6 * | Hexanol | 60/40 | 8,2 | 4,2 | 702 |
| PE 7 * | Hexanol | 40/60 | 5,4 | 6,2 | 697 |
| PE 8 * | Hexanol | 80/20 | 10,7 | 2,0 | 688 |

* Vergleichsbeispiel

Erläuterung:

Keiner der Polyether 1-8 ergibt für sich alleine in wäßriger Lösung einen ausgeprägten Netzeffekt auf PP.

Bei den Abmischungen ist klar ersichtlich, daß Polyether mit ausreichend hydrophobem Anteil (PO) und einer hydrophoben Endgruppe verbunden mit niederem Molekulargewicht Mw (weight average molecular weight) (ca. 500) einen synergistischen Effekt begünstigen. Das heißt die Netzeigenschaften der Abmischungen sind besser als die der Einzelkomponenten.

## Patentansprüche

1. Tensidgemisch, bestehend aus

   a) Silanen der allgemeinen Formel

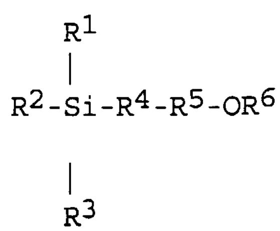

(Formel I)

wobei

| | |
|---|---|
| $R^1$, $R^2$ und $R^3$ | im Molekül gleich oder verschieden sind und aliphatische oder aromatische Kohlenwasserstoffreste bedeuten, |
| $R^4$ | ein zweiwertiger Kohlenwasserstoffrest mit 3 bis 14 Kohlenstoffatomen ist, |
| $R^5$ | ein Rest der Formel $-O(CH_2)_a-$ oder ein Polyetherrest der Formel $-(OC_nH_{2n})_b-$ ist, wobei a einen Wert von 1 bis 6, n einen mittleren Wert von 2 bis 2,5 und b einen Wert von 1 bis 10 hat, |
| $R^6$ | ein Wasserstoffrest, ein Alkylrest mit 1 bis 4 Kohlenstoffatomen oder ein Acetylrest ist, |

und

b) Polyalkylenoxiden der allgemeinen Formel

$$R'O-(C_2H_4O)_c(C_3H_6O)_d-R'', \qquad \text{(Formel II)}$$

wobei

| | |
|---|---|
| c = | bis 20, |
| d = | 1 bis 10 und |
| R' und R'' | unabhängig voneinander Wasserstoff oder eine lineare oder verzweigte Alkylgruppe mit 1 bis 14 Kohlenstoffatomen bedeuten und wobei das Verhältnis c : d 60 : 40 bis 70 : 30 und das mittlere Molekulargewicht Mw 500 bis 600 g/Mol beträgt. |

**2.** Tensidgemisch gemäß Anspruch 1, dad.gek. daß der Anteil der Komponente a) 1 bis 50 Gew.-% und der Anteil an Polyoxyalkylenkomponente b) 50 bis 99 Gew.-% beträgt.

**3.** Tensidgemisch gemäß den Ansprüchen 1 und 2, dadurch gekennzeichnet, daß das Silantensid ein Silan der Formel I ist, bei dem die Reste $R^1$, $R^2$ und $R^3$ Alkylreste mit 1 bis 4 C-Atomen sind, wobei einer dieser Reste durch einen Phenylrest ersetzt sein kann.

**4.** Tensidgemisch gemäß den Ansprüchen 1 bis 3, dadurch gekennzeichnet, daß das Silantensid ein Silan der Formel I ist, bei dem mindestens 90 % der Reste $R^1$, $R^2$ und $R^3$ Methylreste sind.

**5.** Tensidgemisch gemäß den Ansprüchen 1 bis 4, dadurch gekennzeichnet, daß das Silantensid ein Silan der Formel I ist, bei dem der Rest $R^4$ ein zweiwertiger aliphatischer Kohlenwasserstoffrest mit 3 bis 14, insbesondere 3 bis 6 Kohlenstoffatomen ist.

**6.** Tensidgemisch nach einem oder mehreren der vorhergehenden Ansprüche, dadurch gekennzeichnet, daß das Silantensid ein Silan der Formel I ist, bei dem der Rest $R^5$ ein Polyetherrest ist, bei welchem n einen Wert von 2 und b einen Wert von 3 bis 6 hat.

**7.** Verwendung der Gemische gemäß Ansprüche 1 bis 7 als Netzmittel in Pflanzenschutzformulierungen.

## Claims

**1.** Surfactant mixture composed of

a) silanes of the general formula

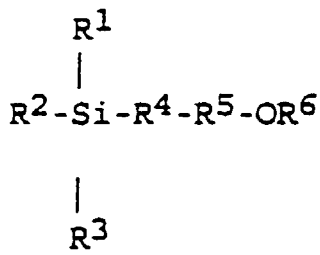

(formula I)

where

| | |
|---|---|
| $R^1$, $R^2$ and $R^3$ | in the molecule are identical or different and denote aliphatic or aromatic hydrocarbon radicals, |
| $R^4$ | is a divalent hydrocarbon radical having 3 to 14 carbon atoms, |
| $R^5$ | is a radical of the formula $-O(CH_2)_a-$ or a polyether radical of the formula $-(OC_nH_{2n})_b-$ where a has a value of from 1 to 6, n has a mean value of from 2 to 2.5 and b has a value of from 1 to 10, |
| $R^6$ | is a hydrogen radical, an alkyl radical having 1 to 4 carbon atoms or an acetyl radical, |

and

b) polyalkylene oxides of the general formula

$$R'O-(C_2H_4O)_c(C_3H_6O)_d-R'' \qquad \text{(formula II)}$$

where

| | |
|---|---|
| c = | any number to 20, |
| d = | 1 to 10 and |
| R' and R" | independently of one another are hydrogen or a linear or branched alkyl group having 1 to 14 carbon atoms and where the ratio c:d is from 60:40 to 70:30 and the mean molecular weight MW is 500 to 600 g/mol. |

**2.** Surfactant mixture according to Claim 1, characterized in that component a) amounts to 1 to 50% by weight and the polyoxyalkylene component b) amounts to 50 to 99% by weight.

**3.** Surfactant mixture according to Claims 1 and 2, characterized in that the silane surfactant is a silane of the formula I in which the radicals $R^1$, $R^2$ and $R^3$ are alkyl radicals having 1 to 4 C atoms, it being possible for one of these radicals to be replaced by a phenyl radical.

**4.** Surfactant mixture according to Claims 1 to 3, characterized in that the silane surfactant is a silane of the formula I in which at least 90% of the radicals $R^1$, $R^2$ and $R^3$ are methyl radicals.

**5.** Surfactant mixture according to Claims 1 to 4, characterized in that the silane surfactant is a silane of the formula I in which the radical $R^4$ is a divalent aliphatic hydrocarbon radical having 3 to 14, in particular 3 to 6, carbon atoms.

**6.** Surfactant mixture according to one or more of the preceding claims, characterized in that the silane surfactant is a silane of the formula I in which the radical $R^5$ is a polyether radical in which n has a value of 2 and b a value of from 3 to 6.

**7.** Use of the mixtures according to Claims 1 to 7 as wetters in crop protection formulations.

**Revendications**

1. Mélange tensioactif, constitué

a) de silanes de formule générale

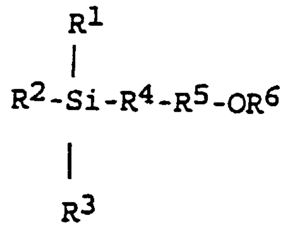

(Formule I)

où

$R^1$, $R^2$ et $R^3$ dans la molécule sont identiques ou différents et représentent des radicaux hydrocarbonés aliphatiques ou aromatiques,
$R^4$ représente un radical hydrocarboné divalent comprenant 3 à 14 atomes de carbone,
$R^5$ représente un radical de formule $-O(CH_2)_a-$ ou un radical polyéther de formule $-(OC_nH_{2n})_b-$, a ayant une valeur de 1 à 6, n une valeur moyenne de 2 à 2,5 et b une valeur de 1 à 10,
$R^6$ représente un radical hydrogène, un radical alkyle comprenant 1 à 4 atomes de carbone ou un radical acétyle,

et
b) de polyalkylèneoxydes de formule générale

$$R'O-(C_2H_4O)_c(C_3H_6O)_d-R'' \qquad \text{(formule II)}$$

où

c peut aller jusqu'à 20,
d est égal à 1 à 10 et
R' et R" représentent, indépendamment l'un de l'autre, un atome d'hydrogène ou un groupe alkyle linéaire ou ramifié comprenant 1 à 14 atomes de carbone et où le rapport c:d s'élève à 60:40 jusqu'à 70:30 et le poids moléculaire moyen $M_w$ s'élève à 500 jusqu'à 600 g/mole.

2. Mélange tensioactif selon la revendication 1, caractérisé en ce que la proportion en les composants a) s'élève à 1 jusqu'à 50% en poids et en ce que la proportion en les composants polyoxyalkylène b) s'élève à 50 jusqu'à 99% en poids.

3. Mélange tensioactif selon les revendications 1 et 2, caractérisé en ce que l'agent tensioactif silane est un silane de formule I, dans lequel les radicaux $R^1$, $R^2$ et $R^3$ sont des radicaux alkyle comprenant 1 à 4 atomes de carbone, un de ces radicaux pouvant être remplacé par un radical phényle.

4. Mélange tensioactif selon les revendications 1 à 3, caractérisé en ce que l'agent tensioactif silane est un silane de formule I, dans lequel au moins 90% des radicaux $R^1$, $R^2$ et $R^3$ sont des radicaux méthyle.

5. Mélange tensioactif selon les revendications 1 à 4, caractérisé en ce que l'agent tensioactif silane est un silane de formule I, dans lequel le radical $R^4$ est un radical hydrocarboné aliphatique divalent comprenant 3 à 14 atomes de carbone, en particulier 3 à 6 atomes de carbone.

6. Mélange tensioactif selon l'une ou plusieurs des revendications précédentes, caractérisé en ce que l'agent tensioactif silane est un silane de formule I, dans lequel le radical $R^5$ est un radical polyéther dans lequel n a une

valeur de 2 et b une valeur de 3 à 6.

**7.** Utilisation des mélanges selon les revendications 1 à 7 comme agent mouillant dans des formulations de protection de végétaux.